# EUROPEAN PATENT SPECIFICATION

(11) **EP 1 657 830 B1**
(45) Date of publication and mention of the grant of the patent: **18.06.2008**
(21) Application number: 04027112.4
(22) Date of filing: 15.11.2004
(51) Int. Cl.: H04B 7/08

(54) **Radio system and method for controlling a radio system**
Radiosystem und Verfahren zum Steuern eines Radiosystems
Système radio et procédé pour contrôler un système radio

(43) Date of publication of application: 17.05.2006
(73) Proprietor: Harman Becker Automotive Systems GmbH, 76307 Karlsbad (DE)
(72) Inventor: Becker, Karl-Anton, 76307 Karlsbad (DE)
(74) Representative: Bertsch, Florian Oliver

(56) References cited:
- EP-A- 0 333 194
- EP-A- 1 045 531
- EP-A- 1 370 016
- WO-A-03/058847
- US-A1- 2001 016 478

## Description

The invention relates to a radio system for the reception of broadcast signals and to a method for controlling a radio system for the reception of broadcast signals. The invention relates especially to a radio system which is used in a vehicle in combination with a navigation system.

### Background of the Invention

Nowadays, navigation systems are often combined with radio systems to form one single head unit which is used for guiding the driver of the vehicle to a predetermined destination, and which is used as entertainment system for audio applications.

In vehicle radio systems often reception systems are used, in which the radio signals are received by multiple antennas. When multiple antennas or multiple receivers are used, antenna diversity operating modus or frequency diversity operating modes are known in the art.

In the antenna diversity operation mode multiple spatially separated antennas are used. When the radio system operates in the antenna diversity operating mode, a receiver system selects one of the antennas as the source of radio signals for processing based on predefined criteria. One criterion may be, e.g., the received signal strength, interference or noise level, signal-to-noise ratio, or other signal quality criteria.

When working in the frequency diversity operating mode a radio system comprises multiple radio receivers. One of the radio receivers may function as an operating receiver, and another receiver functions as a search and check receiver. The operating receiver stays tuned to the frequency of interest to receive and process the received radio signal. On the other hand, the search and check receiver searches for alternative reception frequencies (AFs) that provide a higher signal quality.

If the search and check receiver finds another reception frequency, the operating receiver tunes to the alternate reception frequency or alternatively the check receiver and the operating receiver may switch roles.

Furthermore, an antenna phase diversity mode has been known in which a first receiver coupled to a first antenna and a second receiver coupled to a second antenna are tuned to the same frequency. After a phase correction of one of the signals, the two signals are summed up in order to get a better signal for further processing the received radio signal. A phase-corrected summation of the signals is described, inter alia, in DE 101 02 616 A1.

Normally, in these systems one of the operating modes can be used. When the vehicle is moving the radio system has to comply with many different situations, in which the received radio signals may vary frequently. Therefore, a need exists that the radio system adapts to the different situations.

Furthermore, modern FM radio transmissions include several types of contents. In most cases the FM radio signal or a particular program is a multiplex signal that includes not only left and right channel audio content, but also data content. The data content may carry program information codes that indicate the name of the audio program, the name of the radio station broadcasting the FM radio signal and traffic information. These additional information data, especially the traffic information, may be used by the navigation system when calculating a route from the current position to a predetermined destination taking into account possible traffic congestions or closed routes. When the navigation system calculates a new route, it may need many additional items of information concerning traffic information for the calculated route. The possibility of collecting additional information data also depends on the current operating mode of the radio system. In some applications it may be important to receive the optimal radio signal, in other situations it may be helpful to be able to collect as many additional information data as possible, e.g., traffic information.

EP 1 045 531 A2 discloses a radio system describing digitally transmitted signals, the system comprising two antennas and two tuners. The system works either in an antenna spatial diversity mode or in a frequency diversity mode in which the two tuners switch between two predetermined fixed frequencies.

EP 1 370 016 A1 describes a receiver for receiving a digital signal and an analog signal, wherein in dependence of the reception situation the receiver switches from the digital signal to the analog signal and back.

EP 0 333 194 A2 discloses a radio system in which the receiver extracts service data from the broadcasting signal comprising the list of frequency data of other broadcasting stations giving the same program. When deterioration of the receiving state is decided, a request for changing the tuning frequency is generated.

A need exists to provide a radio system which can best adapt to different situations that can occur during driving.

### Summary of the Invention

These needs are met by a method and by a radio system as mentioned in the independent claims. In the dependent claims preferred embodiments of the invention are described.

According to a first embodiment of the invention the radio system for the reception of broadcast signals comprises two or more antennas picking up radio signals and two signal receivers receiving the radio signals, wherein the at least two antennas and the two receivers are operating in diversity operating modes. Furthermore, an antenna switching unit is provided for building the connection between the receivers and the antennas. A control unit is provided for controlling the antenna switching unit and/or selecting the operating mode according to a predetermined diversity control criterion. Once the diversity control criterion is determined, the control unit is able to connect the different antennas and the different receivers to each other in a certain way. The operating mode of the radio system together with its antennas and with its receivers can be adapted to different situations. The control unit can control the switching unit in such a way that the operating mode is selected which is best for the actual driving condition of the vehicle. The radio system is able to adjust itself to different situations which can arise when the moving vehicle receives the radio signals.

According to the invention, the operating modes comprise at least one of the following operating modes:

First of all, the radio system may work in a hybrid mode in which the first receiver works in a scanning antenna diversity mode in which the first receiver works as an operating receiver and the best antenna is selected as the source of radio signals for processing, the second receiver working as a search and check receiver in a frequency diversity mode. In this case the operating receiver normally selects the antenna picking up signals with a better quality, while the second receiver as a search and check receiver may use either the same antenna as does the operating receiver or the other one. Another possible operating mode is an antenna phase diversity mode in which the first receiver using one antenna and the second receiver using the other antenna are tuned to the same frequency for a phase-controlled summation of the two received signals. This antenna phase diversity mode may be used when the chosen program can only be received on one frequency and when a good signal quality is important.

Furthermore, the radio system may work in a system diversity mode in which one of the receivers or an additional receiver comprises a digital radio receiver receiving digitally broadcast radio signals (e.g. DAB or DRM), the other receiver being an analogue receiver receiving analogously broadcast radio signals. In some geographic regions the radio programs are simultaneously broadcast by digitally broadcast radio signals and by analogously broadcast radio signals. When the signal quality of the received analogously broadcast radio signal is poor, the system may switch to the digital radio receiver receiving the digitally broadcast radio signals.

Furthermore, the radio system may work in a dual play operating mode in which the first receiver receives a first program on a first frequency, the second receiver receiving another program on another frequency. The dual play mode can be used when the passangers in the front want to hear a first radio program, whereas the passenger in the back may use the rear seat entertainment system for hearing another program (and, e.g., uses headphones to hear the other program). The invention provides a multi-mode radio system which provides the optimum operating mode depending on the circumstances. A first hybrid mode may be used when the received program is broadcast on different receiving frequencies. The search and check receiver can search for alternate reception frequencies that have a higher signal quality. Furthermore, as described in detail later on, the second receiver working as a search and check receiver can search for additional information data comprised in the broadcast signals. The search and check receiver can look for digital add-on data having, e.g., the RDS format (Radio Data System) or DARC (Mobile FM Multiplex Broadcast). In addition to news or the name of the received radio station, the RDS data comprise traffic information (TMC) which can be used for a navigation system as described in more detail later on. When the signal quality of the received signal is important or weak, the radio system may work in the antenna phase diversity mode in which both receivers are tuned to a same frequency, the two signals being summed up after a phase correction. When the program of the radio station is broadcast only on one frequency, and when there is no need for information data the radio system may choose this antenna phase diversity mode. The radio system is further able to work in the system diversity mode. Some programs are broadcast via FM, AM or digital radio systems, e.g. DAB (Digital Audio Broadcasting) or DRM (Digital Radio Mondiale). When it is noticed that a program of a radio station is also broadcast via DAB or another digital radio system, a digital radio receiver may be used instead of the analogue receiver. The radio system can always choose either the analogously broadcast signal or the digitally broadcast signal in dependence on the signal quality of the two received signals.

Furthermore, the radio system may select the dual play mode in which the two receivers receive different radio programs on different frequencies for different users in the vehicle.

According to another embodiment of the invention, the radio system may comprise an input unit which the end user can use to choose one of the operating modes. If the end user wants the radio system to work in one predetermined operating mode, the end user can select one of the operating modes. In this case the radio system may stay with the selected operating mode and may not switch automatically in accordance with the predetermined diversity control criterion. According to another embodiment of the invention, the operating mode selected by the end user via the input unit could also be the preferred operating mode, the operating mode being only changed under predetermined criteria.

According to the invention, the control unit controls the antenna switching unit and select the operating mode by choosing either the hybrid mode or the antenna phase diversity mode depending on the predetermined diversity control criterion. The hybrid mode and the antenna phase diversity mode may be the two operating modes in which the radio system works predominantly. When the radio system is used in a vehicle and the vehicle is driving in an area where the selected radio station is only broadcast on one frequency or where the broadcast signals are very weak, the radio system may work in the antenna phase diversity mode. In the hybrid mode, the first receiver may work as an operating receiver and may choose the best antenna and the best antenna and the best frequency for receiving a certain program, this frequency being determined by the other search and check receiver. The search and check receiver may furthermore scan the frequency band for collecting additional information data, especially traffic information data.

According to one embodiment of the invention the control unit controls the switching unit in accordance with one of the following criteria. The first criterion for selecting an operating mode for the radio system may be the signal quality of the received radio signals. This signal quality may be the received signal strength, interference or noise level, signal-to-noise ratio, etc. In other words, the receiver will generally select the best signal available for processing. Another criterion which can be used for selecting the operating mode may be a request for information data comprised in the radio signal. The information data request may originate from an information data request input providing an information data request input signal to the radio system. The information data request input may receive an information data request signal and may transmit it to the radio system (e.g. control unit) indicating that additional information data are needed. As a consequence the control unit may control the antenna switching unit and select the operating mode in such a way that the hybrid mode is selected. In this case the search and check receiver may scan the frequency band in order to find additional information data.

A navigation system comprised in the vehicle normally calculates a route from the present location of the vehicle to a predetermined destination. During this calculation normally the fastest or the shortest route may be calculated. In order to calculate the fastest or shortest route, the navigation system calculating the route should rely on additional traffic information data in order to know whether there is a traffic jam on the calculated route or whether the calculated route may be closed because of an accident.

The information data request input may, as a consequence, be connected to the navigation system, the navigation system transmitting the information data request signal to the information data request input. When the information data request input receives the request signal and the signal is transmitted to the control unit, the control unit of the radio system can select the hybrid mode in which the information data can be collected by the search and scan receiver. The second receiver which is scanning the frequency band can then decode the digital add-on data from the received analogue radio signal by extracting the RDS signal. The collected RDS data are then transmitted to the navigation system, the latter using these RDS data for calculating the optimal route to the destination.

Nowadays, the navigation system and the radio system are normally comprised in one single head unit providing the driver of the vehicle with navigation data and providing audio data to the end user. The radio system of the invention is able to work in the operating mode which is best for the end user. When choosing between the hybrid mode and the antenna phase diversity mode either the best signal quality can be obtained by summing up the two received signals, or, when the navigation system needs additional add-on information data for calculating a route, the hybrid mode may be selected.

The invention further relates to a vehicle navigation system comprising a radio system as described above. The invention helps to run the radio system comprised in a navigation system in the best operating mode in accordance with the operating mode of the navigation system. When the navigation system does not request additional information data, the control unit of the radio system can select the operating mode which is best for the received radio signals or which is chosen by the user of the radio system.

The invention further relates to a method for controlling a radio system for the reception of broadcast signals, comprising the following steps: In a first step a first and second antenna and a first and second receiver are provided, the receivers receive radio signals and operate in diversity operating modes. In a next step a diversity control criterion may be determined which can then, in a next step, be used for controlling the connection between the receivers and the antennas and which can be used for selecting the operating mode of the radio system. According to the invention the radio system cannot only work in one operating mode, but can be run in many different operating modes. In accordance with the predetermined criterion one of the following operating modes which were already described above may be selected: the hybrid mode or the the antenna phase diversity mode.

For selecting the operating mode, according to a further embodiment of the invention the signal quality of the received radio signals may be determined. Furthermore, a request for information data comprised in the radio signal may be determined in addition to the signal quality or instead thereof. The connection between the receivers and the antennas is controlled in such a way and the operating mode is selected in such a way that the operating mode is in accordance with the signal quality and/or in accordance with the request for information data. According to the invention either the signal quality or the request for information data can be determined or both of them, and the operating mode can then be determined in accordance with the two determined items of information. However, it is also possible that only the request for information data is determined and the operating mode is selected in accordance with the request for information data or the signal quality, and the operating mode is selected which provides the best signal quality.

According to another embodiment of the invention, after determining the signal quality of the received radio signal and/or after determining the request for information data contained in the radio signals either the hybrid mode or the antenna phase diversity mode can be selected as operating mode for the radio system.

In the hybrid mode the search and check receiver may scan the frequency band and may search for information data contained in the radio signals.

According to a further embodiment of the invention, the antenna phase diversity mode is selected, if the signal quality does not exceed a predetermined level. This means, when the signal quality is below a certain threshold value, the output signal after the processing and demodulating is optimized by choosing the antenna phase diversity mode. In this case, the antenna phase diversity mode helps to improve the signal by the summation of the phase corrected signals received by the two antennas. On the other hand, the hybrid mode can be selected, if a request for information data is detected. When the navigation system transmits a data request signal to the information data request input and the signal is transmitted to the control unit, the latter will select the hybrid mode for collecting additional information data.

According to a further embodiment of the invention the basic operating mode may be the antenna phase diversity mode when no data request can be detected. When an urgent data request is detected, the operating mode may be changed to the hybrid mode. However, it is also possible to choose the system diversity mode or the dual play play mode as basic operating mode. Upon detection of a data request the operating mode changes to the hybrid mode. If the operating mode is not the hybrid mode, the operating mode is changed to the hybrid mode, when a data request from the navigation system is detected.

According to another embodiment of the invention, the end user can select the basic operating mode when no data request of the navigation system can be detected. Before starting the radio system or before starting the navigation system the end user may have the possibility of choosing which priority operating mode he or she wishes to use. If the end user wishes to have best signal quality he or she may select the antenna phase diversity mode as the basic operating mode. The end user may also choose the hybrid mode as priority for the operating mode, so that the radio system preferably works in the hybrid mode in which the first receiver works as operating receiver and the other receiver works as search and check receiver scanning the frequency band, when priorities are set on the calculation of routes.

When the radio system works in the antenna phase diversity mode or any other possible operating mode and when an information data request signal is detected, the hybrid mode can be selected in which the search and check receiver scans the frequency band and searches for information data.

According to a further embodiment a navigation system connected to the radio system may transmit the information data request signal to the information data request input, and the information data request input may transmit the signal to the control unit which selects the operating mode in accordance with the information data request signal.

However, the radio system is not limited to the two operating modes. According to a further embodiment of the invention it may be detected whether digitally broadcast radio signal can be received. In another step, the received signal quality of the analogously broadcast radio signal can be determined and compared to the signal quality of the digitally broadcast radio signal, and the digitally broadcast radio signal or the analogously broadcast radio signal can be selected depending on the signal quality.

If the dual play mode is selected, a radio signal comprising a first program information received by the first receiver is transmitted to a first reproduction unit, and the radio signal comprising a second program information received by the second receiver is transmitted to a second reproduction unit. In this case two different end users can hear two different radio programs. This can be of help when the vehicle comprises a rear seat entertainment system and when the passengers in the front want to hear another program than do the passengers in the back.

When the radio system works in the hybrid mode, the second receiver can decode digital add-on data from the received analogue radio signals and extract, inter alia, the traffic information which the navigation system needs to calculate the best route to the predetermined destination.

When the radio system comprises a digital radio receiver, a search unit may search whether digitally broadcast radio signals can be received. Other features and advantages of the invention will become apparent to one skilled in the art upon examination of the following Figures and detailed description.

### BRIEF DESCRIPTION OF THE FIGURES

Fig. 1 shows a block diagram illustrating a radio receiver which can work in different operating modes according to predetermined criteria;
Fig. 2 shows another embodiment of a radio receiver capable of choosing either a hybrid mode or an antenna phase diversity mode;
Fig. 3 shows another detail of a multi-mode radio system;
Fig. 4 shows a flowchart with the different steps illustrating a method for selecting an operating mode;
Fig. 5 shows another flowchart illustrating a method for choosing an operating mode of a radio system; and

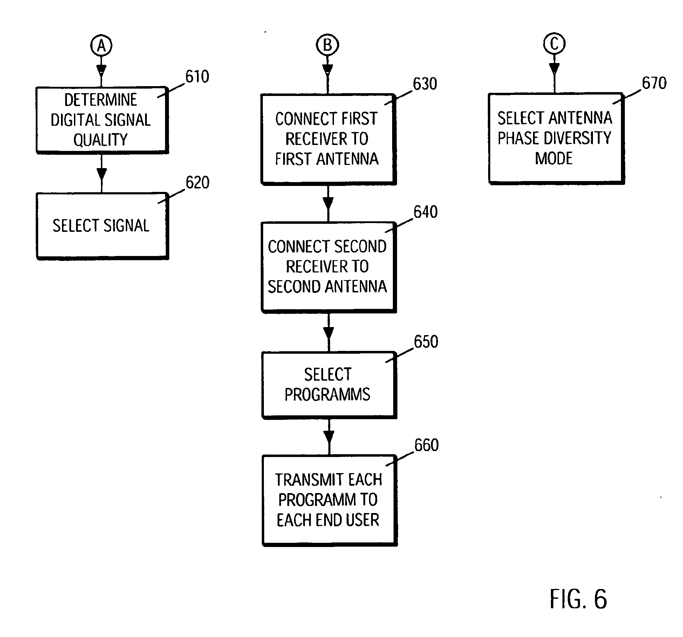

Fig. 6 shows the continued flowchart of Fig. 5.

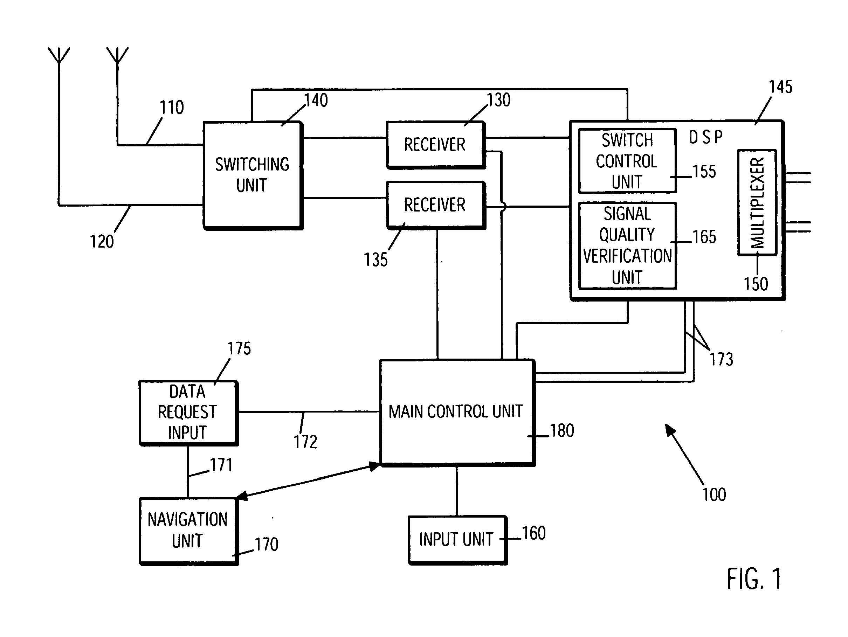

Fig. 1 shows a radio system incorporating features of the invention. In Fig. 1 the radio system 100 comprises two antennas 110, 120 picking up radio signals. The two antennas may be incorporated into different parts of a vehicle, the first antenna being arranged on the top of the vehicle roof, the other antenna being incorporated into any other part of the vehicle. It should be understood that the radio system may also comprise more than two antennas, e.g., three or four. Before the signals are received from two receivers 130, 135, a switching unit 140 is connected between the antennas and the receivers. The switching unit 140 switches the signals picked up by the antennas 110, 120 or by one of the antennas to any of the receivers 130, 135 or to both of them. The received signals are then transmitted to a digital signal processor DSP 145. The DSP comprises a multiplexer 150, a switch control unit 155 and a signal verification unit 165. The way of processing an FM radio signal received by the receivers 130 and 135 and of extracting the program content which the user hears is well known in the art and is, therefore, not described in detail.

In order to control the switching unit, a main control unit 180 is provided which controls the functioning of the DSP and of the radio system. The control unit is connected to the DSP 145 and is connected to an input unit 160 the driver or end user can use in order to input the desired operating mode of the radio system. The end user may input directly that he or she wants to use a hybrid mode in which the first receiver works in a scanning atenna diversity mode, in which the first receiver works as operating receiver and one of the antennas 110, 120 is selected as the source of radio signals for processing, the second receiver working as a search and check receiver in the frequency diversity mode, using either the same or the other antenna of the two antennas for scanning the frequency band. Furthermore, the end user may select an antenna phase diversity mode in which the two receivers are tuned to the same frequency and the two signals are summed up after a phase correction in the DSP 145. Furthermore, the end user may choose a system diversity mode or a dual play mode as described in detail later on.

The DSP 145 further comprises the signal quality verification unit 165. The signal quality verification unit receives the signals from the receivers 130, 135 and checks the signal quality of the received signals. Unit 165 may determine the received signal strength, the interference or noise level, the signal-to-noise ratio or any other signal quality criteria for each of the received signals. The switch control unit 155 may further be connected to the receivers 130, 135 in order to select the operating mode of the receivers.

Furthermore, a navigation unit 170 is provided. When the navigation unit guides a driver of the vehicle, in which the radio system of Fig. 1 may be incorporated, to a certain destination, the navigation unit 170 calculates the best route to a predetermined destination. In order to calculate the best route, the navigation unit needs to have additional information, e.g. traffic information. Therefore, an information data request signal is transmitted from the navigation system 170 via connection 171 to a data request input 175. The data request input transmits the information data request signal to the control unit 180 via connection 172. The control unit processes the received signal and transmits the information of the data request signal to DSP 145. The switch control unit 155 controls the switching unit and the two receivers in such a way that the radio system works in the hybrid mode, in which one of the receivers (e.g. 130) works in a scanning antenna diversity mode, in which the first receiver 130 works as an operating receiver and one antenna 110 is selected as the source of radio signals for processing, the second receiver 135 working as a search and check receiver in a frequency diversity mode, the antennas 110 or 120 being selected for scanning the frequency band. The search and check receiver searches for information data comprised in the received radio signals. In the digital signal processor 145 the received radio signals comprising digital add-on data comprising the information data needed by the navigation system are decoded and then transmitted via connection 173 to the control unit 180 which then transmits the data to the navigation unit 170. The information data may comprise the RDS signals comprised in the broadcast radio signals.

Furthermore, the signal quality verification unit may verify the received signals, and when the signal quality of the received signals is poor or when a program which the driver of the vehicle wants to hear is only broadcast on one frequency, the signal quality verification unit may transmit the result to the switch control unit, the latter controlling the switching unit and the receivers in such a way that the antenna phase diversity mode is selected.

If a dual play mode is selected through input unit 140, the switching unit may be configured in such a way that the dual play operating mode is selected. Furthermore, the system diversity mode may be selected in which the first antenna receives digitally broadcast signals, the other antenna receiving analoguously broadcast signals.

It should be understood that the navigation unit 170 comprises many other features needed in order to provide a full guiding system to the driver. Navigation systems likes these are well known in the art, and for the sake of clarity a detailed description of the navigation unit is omitted, since it does not help to understand the present invention.

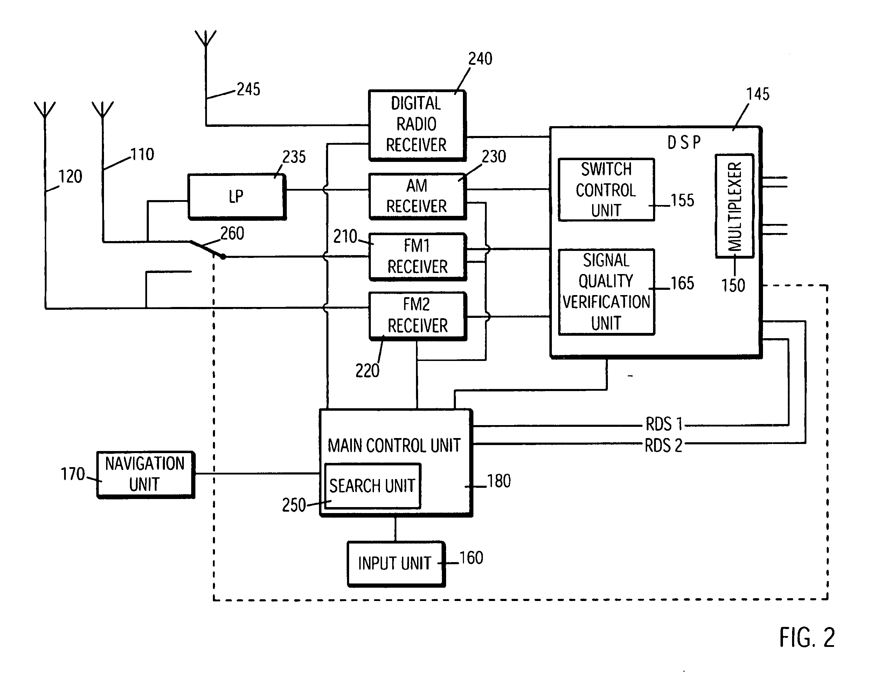

In Fig. 2 another radio system is shown which is able to operate in different operating modes. Features which were already explained in combination with Fig. 1 are not explained in detail any more and have the same reference numeral. In the embodiment of Fig. 2 two FM receivers 210 and 220 are shown. Furthermore, an AM receiver 230 is provided for receiving LW, MW and SW signals. Furthermore, a low pass filter 235 is connected between the antenna 110 and the AM receiver for filtering out the high frequencies. Furthermore, a digital radio receiver 240 is connected to an antenna 245 which is able to pick up digitally broadcast radio signals. A search unit 250 is provided in a control unit 280 in order to check whether digitally broadcast signals can be received. In the example of Fig. 2 the switching unit shown in Fig. 1 is a switch 260 which connects the receiver 210 either to the first antenna 110 or to the second antenna 120. In the example shown the switch connects the antenna 110 to the first receiver 210, while the second receiver 220 is connectedto the second antenna 120. In this connection state a radio system could work in the hybrid mode in which the first receiver 210 works as operating receiver, while the second receiver works as search and scan receiver connecting the additional data needed for the navigation unit 170. The digital information data are decoded in the DSP 145, and the RDS data (RDS1, RDS2) are transmitted to the navigation unit via the control unit 280. The navigation unit, in turn, uses the received information data for calculating a route taking into consideration traffic information comprised in the digital information data. In the hybrid mode the operating receiver will select the antenna having the better signal quality, i.e. the operating receiver 210 will either select antenna 110 or 120 and the switch will be operated accordingly. In the embodiment shown, the search and scan receiver 220 uses antenna 120 to scan the frequency band. In the embodiment shown the radio system can also work in the antenna phase diversity mode in which the receiver 210 is connected to the antenna 110 and the receiver 220 is connected to the antenna 120 and both receivers are tuned to have the same frequency, the signal from receiver 210 being added to the signal of receiver 220, so that a better signal-to-noise ratio can be obtained.

The switch 260 is controlled by the switch control unit 155 which receives the information from control unit 280 how to position the switch 260.

The switch 260 can also be switched to another configuration in which it connects the receiver 210 to the antenna 120. In this case the radio system can also work in the hybrid mode in which the first receiver 210 works as an operating receiver, the second receiver 220 using the same antenna for scanning the frequency band. As can be seen from the embodiments shown in Fig. 2, the present invention with two receivers and at least two antennas and a switching unit provides a radio system which can either work in the antenna phase diversity mode in which the noise suppression plays an important role. Furthermore, the system can work in the hybrid mode in which one receiver works as an operating receiver, the second receiver collecting information data for the navigation unit. In the hybrid mode the receiver still has the possibility of choosing one of the antennas and can, therefore, choose the antenna having the best signal quality. The receiver 210 has still the choice to select one of the antennas 110 or 120, the antenna being used which provides the best signal quality results.

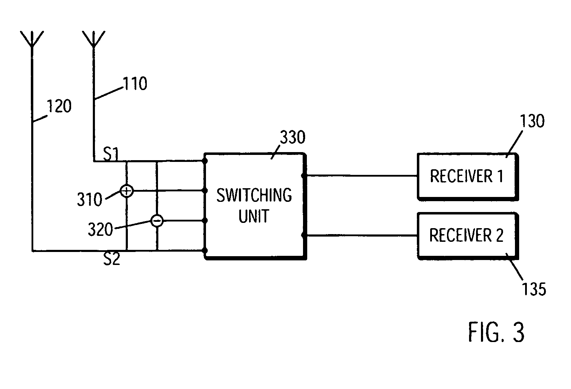

In Fig. 3 another detail of the radio system is shown. The embodiment shown in Fig. 3 can help to eliminate reflections which come from a multi-pass reception of the radio signals. When the radio signal is not directly picked up from the antenna, but is reflected from an obstacle before being picked up by the antenna, the signal quality deteriorates.

In order to do so, the signal S 1 received by antenna 110 is added to signal S2 received by antenna 120 in an adding unit 310. In a subtract tion unit 320 signal S2 is deducted from signal S 1, so that as a consequence the switching unit 330 has four inputs receiving the signals S 1, S1+S2, S1-S2, S2. These four signals can then be used in order to determine multi-pass signals in the received radio signals. When using the four signals, the reflected radio signals can be suppressed in an effective way, as it is easier to suppress multipath reflections with four signal characteristics than when the two signals S1+S2 are used alone.

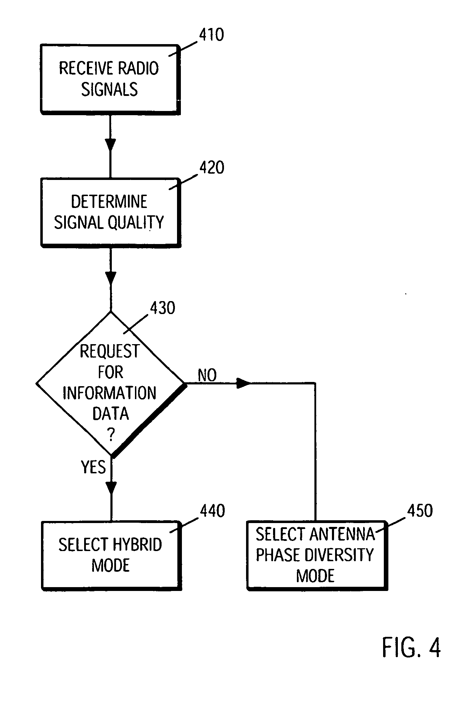

In Fig. 4 a flowchart for determining an operating mode is shown. In step 410 the radio signals are received using the antennas 110 and 120. In a second step the signal quality is determined in order to know whether the received signal quality is good enough for the further processing of the received radio signals. In step 430 it is decided whether a request for information data is present on the data request input 175. If the navigation unit needs additional information data for calculating a route, the request signal is sent to the control unit, the control unit selecting the hybrid mode as the operating mode of the radio system (step 440). If no request for information data can be detected, the antenna phase diversity mode can be selected as the operating mode of the radio system (step 450). It should be understood that any other operating mode than the antenna phase diversity mode can be selected in step 450. When no data request is present for additional information data, the radio system can work in any operating mode, but when an urgent data request from the navigation system is detected, the hybrid mode is selected in which the second receiver scans the frequency band and collects additional information data. Furthermore, it is also possible to omit the determination of the signal quality in step 420. The operating mode can also be selected based only on the query whether information data are requested by the navigation unit or not.

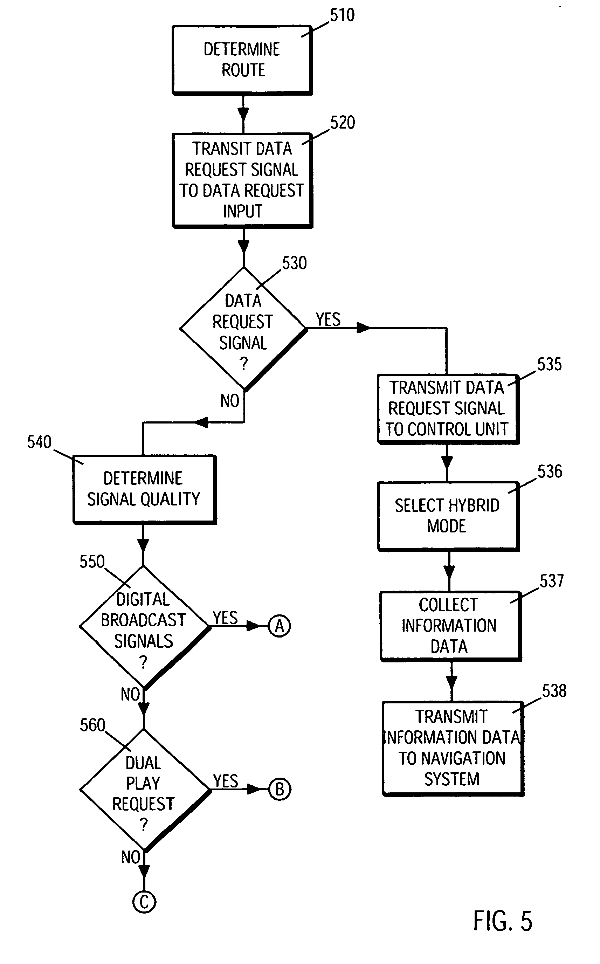

This is shown in more detail in Fig. 5. When the navigation unit determines a route in step 510, the navigation unit should use up-to-date traffic information in order to calculate the best route. As a consequence, the navigation system transmits a data request signal to the data request input in step 520. In step 530 it is asked whether a data request signal is present at the data request input. If this is the case, the data request signal is transmitted to the control unit in step 535, the hybrid mode is selected as the operating mode of the radio system in step 536. In this case, the search and scan receiver scans the frequency band and collects additional information data in step 537. The digital add-on information data comprised in the radio signal are decoded and transmitted to the navigation unit in step 538.

If no data request signal can be detected in step 530, the signal quality of the analogously received signal can be determined in step 540. In a step 550 it can be asked whether digitally broadcast signals can be received. If this is not the case, it can be asked in step 560 whether a dual play mode is requested.

If it is determined in step 550 that digitally broadcast signals can be received, the signal quality of the digitally broadcast signal can be determined in step 610. In step 620 either the digitally broadcast signal or the analogously broadcast signal is selected in dependence on the received signal quality.

If a dual play mode request is detected in step 560, the first receiver of the two receivers may be connected to the first antenna, and the second receiver may be connected to the second antenna (steps 630 and 640). In step 650 the end user can select the program he or she wants to hear, when in step 660 the first program is provided to the first end user, the second program being provided to the second end user.

If there is no dual play mode request and there have been no digital broadcast signals, the antenna phase diversity mode can be selected in step 670.

In conclusion, the invention provides a multi-mode radio system which chooses the operating mode in accordance with different situations. When a navigation system needs additional information data, the radio system can react accordingly and can be operated in such a way that as many additional information data are provided as possible in the hybrid mode. Furthermore, many other operating modes can be selected in accordance with different situations, each operating mode being best for one special situation.

## Claims

1. Radio system (100) for the reception of broadcast signals comprising
- two antennas (110, 120) picking up radio signals,
- two signal receivers (130, 135) receiving the radio signals,
wherein the two antennas and the two receivers are operating in diversity operating modes,
- an antenna switching unit (140) for building the connection between the receivers and the antennas, and
- a control unit (155) for controlling the antenna switching unit (140) and selecting the operating mode according to a predetermined diversity control criterion, **characterized in that** the control unit selects either a hybrid mode, in which the first receiver works in a scanning antenna diversity mode, in which the first receiver works as operating receiver and one of the antennas is selected as the source of radio signals for processing, the second receiver working as search and check receiver in a frequency diversity mode, in which the search and check receiver scans the frequency band searching for alternate reception frequencies and/or for additional information data comprised in the broadcast signals, or an antenna phase diversity mode, in which the first receiver using one antenna and the second receiver using the other antenna are tuned to the same frequency for a phase controlled summation of the two received signals

2. Radio system according to claim 1, wherein the operating modes comprise further at least one of the following operating modes:
- a system diversity mode in which the first receiver comprises a digital radio receiver receiving digitally broadcast radio signals, the second receiver being an analogue receiver receiving analogously broadcast radio signals, and
- a dual play mode, in which the first receiver receives a first program on a first frequency, the second receiver receiving another program on another frequency.

3. Radio system according to any of the preceding claims, further comprising a third receiver (230) receiving AM signals, the two other receivers receiving FM signals.

4. Radio system according to any of the preceding claims, further comprising an input unit (160) that the end user can use to choose one of the operating modes.

5. Radio system according to any of the preceding claims, further comprising a digital radio receiver (240) and an antenna (245) adapted to pick up digitally broadcast radio signals.

6. Radio system according to any of the preceding claims, further comprising a search unit (250) for searching whether digitally broadcast radio signals can be received.

7. Radio system according to any of the preceding claims, wherein the control unit (155) controls the switching unit (140) in accordance with one of the following criteria: a signal quality of the received radio signals, a request for information data comprised in the radio signal.

8. Radio system according to any of the preceding claims further comprising an information data request input (175) for receiving an information data request signal.

9. Radio system according to claim 8, wherein the information data request input is connected to a navigation system (170), the navigation system transmitting the information data request signal to the information data request input.

10. Radio system according to claim 8 or 9, wherein the control unit (155) selects the hybrid mode, when an information data request signal is detected at the information data request input (175).

11. Radio system according to any of claims 1 to 10, wherein the second receiver, in the hybrid mode, decodes digital add-on data from the received analog radio signal.

12. Vehicle navigation system comprising a radio system according to any of claims 1 to 11.

13. Method for controlling a radio system for the reception of broadcast signals, comprising the following steps:
- providing a first and a second antenna (110, 120) and a first and a second receiver (130, 135), the receivers receiving the radio signals and operating in diversity operating modes,
- determining a diversity control criterion,
- controlling the connection between the receivers and the antennas and selecting the operation mode in accordance with the determined criterion,
wherein either a hybrid mode, in which the first receiver works in a scanning antenna diversity mode, in which the first receiver works as operating receiver and one of the antennas is selected as the source of radio signals for processing, the second receiver working as search and check receiver in a frequency diversity mode, in which the search and check receiver scans the frequency band searching for alternate reception frequencies and/or for additional information data comprised in the broadcast signals, or an antenna phase diversity mode, in which the first receiver using one antenna and the second receiver using the other antenna are tuned to the same frequency for a phase controlled summation of the two received signals is selected depending on the determined diversity criterion.

14. Method according to claim 13, wherein additionally one of the following operating modes can be selected:
- a system diversity mode in which the first receiver comprises a digital radio receiver receiving digitally broadcast radio signals, the second receiver being an analogue receiver receiving analogously broadcast radio signals, and
- a dual play mode, in which the first receiver receives a first program on a first frequency, the second receiver receiving another program on another frequency.

15. Method according to claim 13 or 14, further comprising the steps of:
- determining a signal quality of the received radio signals, and/or
- determining a request for information data comprised in the radio signals,
- controlling the connection between the receivers and the antennas and selecting the operating mode in accordance with the signal quality and/or in accordance with the request for information data.

16. Method according to any of claims 13 to 15, further comprising the steps of:
- determining the signal quality of the received radio signals, and/or
- determining the request for information data contained in the radio signals,
- selecting either the hybrid mode or the antenna phase diversity mode depending on the determined signal quality and/or the determined request for information data.

17. Method according to claim 16, wherein the antenna phase diversity mode is selected if the signal quality does not exceed a predetermined level and/or the hybrid mode being selected if a request for information data is detected.

18. Method according to any of claims 13 to 17, further comprising the steps of:
- detecting whether an information data request signal can be detected, and in the affirmative,
- selecting the hybrid mode in which the search and check receiver scans the frequency band and searches for information data.

19. Method according to claim 18, wherein a navigation system (170) connected to the radio system transmits an information data request signal to an information data request input, the information data request input transmitting the signal to a control unit which selects the operating mode in accordance with the information data request signal.

20. Method according to any of claims 13 to 19, further comprising the steps of:
- detecting, whether digitally broadcast radio signals can be received,
- determining the received signal quality of the analogously broadcast radio signal,
- selecting the digitally broadcast radio signal or the analogously broadcast radio signal depending on the signal quality.

21. Method according to any of claims 13 to 20, further comprising the steps of detecting whether the dual play mode is selected, and in the affirmative, transmitting the radio signal comprising a first program information received by the first receiver from the first antenna to a first reproduction unit, and transmitting the radio signal comprising a second program information received by the second receiver from the second antenna to a second reproduction unit.

22. Method according to any of claims 13 to 21, wherein the second receiver, in the hybrid mode, decodes digital add-on data from the received analog radio signal.

## Patentansprüche

1. Radiosystem (100) für den Empfang von Rundfunksignalen, umfassend
- zwei Antennen (110, 120), welche Funksignale auffangen,
- zwei Signalempfänger (130, 135), welche die Funksignale empfangen, wobei die zwei Antennen und die zwei Empfänger in Diversity-Betriebsarten arbeiten,
- eine Antennenschalteinheit (140) zum Aufbauen der Verbindung zwischen den Empfängern und den Antennen, und
- eine Steuereinheit (155) zum Steuern der Antennenschalteinheit (140) und Auswählen der Betriebsart gemäß einem vorbestimmten Diversity-Steuerkriterium, **dadurch gekennzeichnet, dass** die Steuereinheit entweder
eine Hybridbetriebsart, in welcher der erste Empfänger in einer Antennen-Scanning-Diversity-Betriebsart arbeitet, in welcher der erste Empfänger als Betriebsempfänger arbeitet und
eine der Antennen als die Quelle der Funksignale für ein Verarbeiten ausgewählt ist, wobei der zweite Empfänger als Such- und Testempfänger in einer Frequenz-Diversity-Betriebsart arbeitet, in welcher der Such- und Testempfänger das Frequenzband abtastet und alternative Empfangsfrequenzen und/oder zusätzliche Informationsdaten, welche in den Rundfunksignalen enthalten sind, sucht, oder
eine Antennenphasen-Diversity-Betriebsart, in welcher der erste Empfänger, welcher eine Antenne verwendet, und der zweite Empfänger, welcher die andere Antenne verwendet, auf die gleiche Frequenz für eine phasengesteuerte Summation der zwei empfangenen Signale abgestimmt sind, auswählt.

2. Radiosystem nach Anspruch 1, wobei die Betriebsarten ferner mindestens eine der folgenden Betriebsarten umfassen:
- eine System-Diversity-Betriebsart, in welcher der erste Empfänger einen digitalen Radioempfänger umfasst, welcher digitale Rundfunksignale empfängt, wobei der zweite Empfänger ein analoger Empfänger ist, welcher analoge Rundfunksignale empfängt, und
- eine Doppelwiedergabebetriebsart, in welcher der erste Empfänger ein erstes Programm auf einer ersten Frequenz empfängt, wobei der zweite Empfänger ein anderes Programm auf einer anderen Frequenz empfängt.

3. Radiosystem nach einem der vorhergehenden Ansprüche, ferner umfassend einen dritten Empfänger (230), welcher AM-Signale empfängt, wobei die zwei anderen Empfänger FM-Signale empfangen.

4. Radiosystem nach einem der vorhergehenden Ansprüche, ferner umfassend eine Eingabeeinheit (160), welche ein Endbenutzer verwenden kann, um eine der Betriebsarten auszuwählen.

5. Radiosystem nach einem der vorhergehenden Ansprüche, ferner umfassend einen Digitalradioempfänger (240) und eine Antenne (245), welche ausgestaltet ist, digitale Rundfunksignale zu empfangen.

6. Radiosystem nach einem der vorhergehenden Ansprüche, ferner umfassend eine Sucheinheit (250) zum Suchen, ob digitale Rundfunksignale empfangen werden können.

7. Radiosystem nach einem der vorhergehenden Ansprüche, wobei die Steuereinheit (155) die Schalteinheit (140) gemäß einem der nachfolgenden Kriterien steuert: eine Signalqualität des empfangenen Funksignals, eine Anfrage nach Informationsdaten, welche in dem Funksignal enthalten sind.

8. Radiosystem nach einem der vorhergehenden Ansprüche, ferner umfassend einen Informationsdatenanfrageeingang (175) zum Empfangen eines Informationsdatenanfragesignals.

9. Radiosystem nach Anspruch 8, wobei der Informationsdatenanfrageeingang mit einem Navigationssystem (170) verbunden ist, wobei das Navigationssystem das Informationsdatenanfragesignal zu dem Informationsdatenanfrageeingang überträgt.

10. Radiosystem nach Anspruch 8 oder 9, wobei die Steuereinheit (155) die Hybridbetriebsart auswählt, wenn ein Informationsdatenanfragesignal an dem Informationsdatenanfrageeingang (175) erfasst wird.

11. Radiosystem nach einem der Ansprüche 1-10, wobei der zweite Empfänger in der Hybridbetriebsart digitale Zusatzdaten aus dem empfangenen analogen Funksignal dekodiert.

12. Fahrzeugnavigationssystem, welches ein Radiosystem nach einem der Ansprüche 1-11 umfasst.

13. Verfahren zum Steuern eines Radiosystems für den Empfang von Rundfunksignalen, umfassend die folgenden Schritte:
- Bereitstellen einer ersten und einer zweiten Antenne (110, 120) und eines ersten und eines zweiten Empfängers (130, 135), wobei die Empfänger die Funksignale empfangen und in Diversity-Betriebsarten arbeiten,
- Bestimmen eines Diversity-Steuerkriteriums,
- Steuern der Verbindung zwischen den Empfängern und den Antennen und Auswählen der Betriebsart gemäß dem bestimmten Kriterium,
wobei entweder
eine Hybridbetriebsart, in welcher der erste Empfänger in einer Antennen-Scanning-Diversity-Betriebsart arbeitet, in welcher der erste Empfänger als Betriebsempfänger arbeitet und
eine der Antennen als die Quelle von Funksignalen für eine Verarbeitung ausgewählt wird, wobei der zweite Empfänger als ein Such- und Testempfänger in einer Frequenz-Diversity-Betriebsart arbeitet, in welcher der Such- und Testempfänger das Frequenzband abtastet und nach alternativen Empfangsfrequenzen und/oder zusätzlichen Informationsdaten, welche in den Rundfunksignalen enthalten sind, sucht,
oder eine Antennenphasen-Diversity-Betriebsart, in welcher der erste Empfänger, welcher eine Antenne verwendet, und der zweite Empfänger, welcher die andere Antenne verwendet, auf die gleiche Frequenz für eine phasengesteuerte Summation der zwei empfangenen Signale abgestimmt sind,
in Abhängigkeit von dem bestimmten Diversity-Kriterium ausgewählt wird.

14. Verfahren nach Anspruch 13, wobei zusätzlich eine der folgenden Betriebsarten ausgewählt werden kann:
- eine System-Diversity-Betriebsart, in welcher der erste Empfänger einen Digitalradioempfänger umfasst, welcher digitale Rundfunksignale empfängt, wobei der zweite Empfänger ein Analogempfänger ist, welcher analoge Rundfunksignale empfängt, und
- eine Doppelwiedergabebetriebsart, in welcher der erste Empfänger ein erstes Programm auf einer ersten Frequenz empfängt, wobei der zweite Empfänger ein anderes Programm auf einer anderen Frequenz empfängt.

15. Verfahren nach Anspruch 13 oder 14, ferner umfassend die Schritte:
- Bestimmen einer Signalqualität der empfangenen Funksignale und/oder
- Bestimmen einer Anfrage nach Informationsdaten, welche in den Funksignalen enthalten sind,
- Steuern der Verbindung zwischen den Empfängern und den Antennen und Auswählen der Betriebsart gemäß der Signalqualität und/oder gemäß der Anfrage nach Informationsdaten.

16. Verfahren nach einem der Ansprüche 13-15, ferner umfassend die Schritte:
- Bestimmen der Signalqualität der empfangenen Funksignale und/oder
- Bestimmen der Anfrage nach Informationsdaten, welche in den Funksignalen enthalten sind,
- Auswählen von entweder der Hybridbetriebsart oder der Antennenphasen-Diversity-Betriebsart in Abhängigkeit von der bestimmten Signalqualität und/oder der bestimmten Anfrage nach Informationsdaten.

17. Verfahren nach Anspruch 16, wobei die Antennenphasen-Diversity-Betriebsart ausgewählt wird, wenn die Signalqualität einen vorbestimmten Pegel nicht überschreitet, und/oder die Hybridbetriebsart ausgewählt wird, wenn eine Anfrage nach Informationsdaten erfasst wird.

18. Verfahren nach einem der Ansprüche 13-17, ferner umfassend die Schritte:
- Erfassen, ob ein Informationsdatenanfragesignal erfasst werden kann und im Falle einer Bestätigung
- Auswählen der Hybridbetriebsart, in welcher der Such- und Testempfänger das Frequenzband abtastet und nach Informationsdaten sucht.

19. Verfahren nach Anspruch 18, wobei ein Navigationssystem (170), welches mit dem Radiosystem verbunden ist, ein Informationsdatenanfragesignal zu einem Informationsdatenanfrageeingang überträgt, wobei der Informationsdatenanfrageeingang das Signal zu einer Steuereinheit überträgt, welche die Betriebsart gemäß dem Informationsdatenanfragesignal auswählt.

20. Verfahren nach einem der Ansprüche 13-19, ferner umfassend die Schritte:
- Erfassen, ob digitale Rundfunksignale empfangen werden können,
- Bestimmen der empfangenen Signalqualität des analogen Rundfunksignals,
- Auswählen des digitalen Rundfunksignals oder des analogen Rundfunksignals in Abhängigkeit von der Signalqualität.

21. Verfahren nach einem der Ansprüche 13-20, ferner umfassend die Schritte
Erfassen, ob die Doppelwiedergabebetriebsart ausgewählt ist, und im Fall einer Bestätigung
Übertragen des Funksignals, welches eine erste von dem ersten Empfänger empfangene Programminformation umfasst, von der ersten Antenne zu einer ersten Wiedergabeeinheit und Übertragen des Funksignals, welches eine zweite von dem zweiten Empfänger empfangene Programminformation umfasst, von der zweiten Antenne zu einer zweiten Wiedergabeeinheit.

22. Verfahren nach einem der Ansprüche 13-21, wobei der zweite Empfänger in der Hybridbetriebsart digitale Zusatzdaten aus dem empfangenen analogen Funksignal dekodiert.

## Revendications

1. Système radio (100) destiné à la réception de signaux de diffusion comprenant
- deux antennes (110, 120) captant des signaux radio,
- deux récepteurs de signaux (130, 135) recevant les signaux radio,
dans lequel les deux antennes et les deux récepteurs fonctionnent dans des modes de fonctionnement en diversité,
- une unité de commutation d'antennes (140) destinée à assurer la connexion entre les récepteurs et les antennes, et
- une unité de commande (155) destinée à contrôler l'unité de commutation d'antennes (140) et à sélectionner le mode de fonctionnement selon un critère de contrôle de diversité prédéterminé, **caractérisé en ce que** l'unité de commande sélectionne soit un mode hybride, dans lequel le premier récepteur fonctionne dans un mode de diversité d'antenne à balayage, dans lequel le premier récepteur fonctionne comme un récepteur opérationnel et l'une des antennes est sélectionnée comme source de signaux radio à traiter, le second récepteur fonctionnant comme un récepteur de recherche et de vérification dans un mode de diversité en fréquence, dans lequel le récepteur de recherche et de vérification scanne la bande de fréquences en recherchant des fréquences de réception alternatives et/ou des données d'information supplémentaires comprises dans les signaux de diffusion, soit un mode de diversité de phases d'antennes, dans lequel le premier récepteur utilisant une antenne et le second récepteur utilisant l'autre antenne sont réglés sur la même fréquence en vue d'une addition par contrôle de phase des deux signaux reçus.

2. Système radio selon la revendication 1, dans lequel les modes de fonctionnement comprennent en outre au moins l'un des modes de fonctionnement suivants :
- un mode de diversité de système dans lequel le premier récepteur comprend un récepteur radio numérique recevant des signaux radio diffusés numériquement, le second récepteur étant un récepteur analogique recevant des signaux radio diffusés de manière analogique, et
- un mode de lecture double, dans lequel le premier récepteur reçoit un premier programme sur une première fréquence, le second récepteur recevant un autre programme sur une autre fréquence.

3. Système radio selon l'une quelconque des revendications précédentes, comprenant en outre un troisième récepteur (230) recevant des signaux AM, les deux autres récepteurs recevant des signaux FM.

4. Système radio selon l'une quelconque des revendications précédentes, comprenant en outre une unité d'entrée (160) que l'utilisateur final peut utiliser afin de choisir l'un des modes de fonctionnement.

5. Système radio selon l'une quelconque des revendications précédentes, comprenant en outre un récepteur radio numérique (240) et une antenne (245) adaptée afin de capter des signaux radio diffusés numériquement.

6. Système radio selon l'une quelconque des revendications précédentes, comprenant en outre une unité de recherche (250) destinée à rechercher si des signaux radio diffusés numériquement peuvent être reçus.

7. Système radio selon l'une quelconque des revendications précédentes, dans lequel l'unité de commande (155) contrôle l'unité de commutation (140) selon l'un des critères suivants : une qualité de signal des signaux radio reçus, une demande de données d'information comprises dans le signal radio.

8. Système radio selon l'une quelconque des revendications précédentes, comprenant en outre une entrée de demande de données d'information (175) destinée à recevoir un signal de demande de données d'information.

9. Système radio selon la revendication 8, dans lequel l'entrée de demande de données d'information est reliée à un système de navigation (170), le système de navigation transmettant le signal de demande de données d'information à l'entrée de demande de données d'information.

10. Système radio selon la revendication 8 ou 9, dans lequel l'unité de commande (155) sélectionne le mode hybride, lorsqu'un signal de demande de données d'information est détecté au niveau de l'entrée de demande de données d'information (175).

11. Système radio selon l'une quelconque des revendications 1 à 10,
dans lequel le second récepteur, en mode hybride, décode des données numériques d'appoint à partir du signal radio analogique reçu.

12. Système de navigation de véhicule comprenant un système radio selon l'une quelconque des revendications 1 à 11.

13. Procédé de contrôle d'un système radio destiné à la réception de signaux de diffusion, comprenant les étapes suivantes :
- le fait de prévoir une première et une seconde antennes (110, 120) et un premier et un second récepteurs (130, 135), les récepteurs recevant les signaux radio et fonctionnant dans des modes de fonctionnement en diversité,
- la détermination d'un critère de contrôle de diversité,
- le contrôle de la connexion entre les récepteurs et les antennes et la sélection du mode de fonctionnement selon le critère déterminé,
dans lequel soit un mode hybride, dans lequel le premier récepteur fonctionne dans un mode de diversité d'antenne à balayage, dans lequel le premier récepteur fonctionne comme un récepteur opérationnel et l'une des antennes est sélectionnée comme source de signaux radio à traiter, le second récepteur fonctionnant comme un récepteur de recherche et de vérification dans un mode de diversité en fréquence, dans lequel le récepteur de recherche et de vérification scanne la bande de fréquences en recherchant des fréquences de réception alternatives et/ou des données d'information supplémentaires comprises dans les signaux de diffusion, soit un mode de diversité de phases d'antennes, dans lequel le premier récepteur utilisant une antenne et le second récepteur utilisant l'autre antenne sont réglés sur la même fréquence en vue d'une addition par contrôle de phase des deux signaux reçus, est sélectionné selon le critère de diversité déterminé.

14. Procédé selon la revendication 13, dans lequel, en outre, l'un des modes de fonctionnement suivants peut être sélectionné :
- un mode de diversité de système dans lequel le premier récepteur comprend un récepteur radio numérique recevant des signaux radio diffusés numériquement, le second récepteur étant un récepteur analogique recevant des signaux radio diffusés analogiquement, et
- un mode de lecture double, dans lequel le premier récepteur reçoit un premier programme sur une première fréquence, le second récepteur recevant un autre programme sur une autre fréquence.

15. Procédé selon la revendication 13 ou 14, comprenant en outre les étapes consistant à :
- déterminer une qualité de signal des signaux radio reçus, et/ou
- déterminer une demande de données d'information comprises dans les signaux radio,
- contrôler la connexion entre les récepteurs et les antennes et sélectionner le mode de fonctionnement selon la qualité de signal et/ou selon la demande de données d'information.

16. Procédé selon l'une quelconque des revendications 13 à 15, comprenant en outre les étapes consistant à :
- déterminer la qualité de signal des signaux radio reçus, et/ou
- déterminer la demande de données d'information contenues dans les signaux radio,
- sélectionner soit le mode hybride, soit le mode de diversité de phases d'antennes selon la qualité de signal déterminée et/ou la demande déterminée de données d'information.

17. Procédé selon la revendication 16, dans lequel le mode de diversité de phases d'antennes est sélectionné si la qualité de signal ne dépasse pas un niveau prédéterminé et/ou le mode hybride est sélectionné si une demande de données d'information est détectée.

18. Procédé selon l'une quelconque des revendications 13 à 17, comprenant en outre les étapes consistant à :
- détecter si un signal de demande de données d'information peut être détecté, et, si oui,
- sélectionner le mode hybride dans lequel le récepteur de recherche et de vérification scanne la bande de fréquences et recherche des données d'information.

19. Procédé selon la revendication 18, dans lequel un système de navigation (170) relié au système radio transmet un signal de demande de données d'information à une entrée de demande de données d'information, l'entrée de demande de données d'information transmettant le signal à une unité de commande qui sélectionne le mode de fonctionnement selon le signal de demande de données d'information.

20. Procédé selon l'une quelconque des revendications 13 à 19, comprenant en outre les étapes consistant à :
- détecter si des signaux radio diffusés numériquement peuvent être reçus,
- déterminer la qualité de signal reçue du signal radio diffusé analogiquement,
- sélectionner le signal radio diffusé numériquement ou le signal radio diffusé analogiquement selon la qualité de signal.

21. Procédé selon l'une quelconque des revendications 13 à 20, comprenant en outre les étapes consistant à détecter si le mode de lecture double est sélectionné, et si oui, à transmettre le signal radio comprenant des informations de premier programme reçues par le premier récepteur de la part de la première antenne à une première unité de reproduction, et à transmettre le signal radio comprenant des informations de second programme reçues par le second récepteur de la part de la seconde antenne à une seconde unité de reproduction.

22. Procédé selon l'une quelconque des revendications 13 à 21, dans lequel le second récepteur, en mode hybride, décode des données numériques d'appoint à partir du signal radio analogique reçu.
